Europäisches Patentamt

European Patent Office

Office européen des brevets

(11) Numéro de publication: **0 058 806**
**B1**

# FASCICULE DE BREVET EUROPEEN

(45) Date de publication du fascicule du brevet:
**17.09.86**

(21) Numéro de dépôt: **81401835.4**

(22) Date de dépôt: **19.11.81**

(51) Int. Cl.⁴: **G 01 J 5/52**

(54) **Procédé de mesure du rayonnement infrarouge pour déterminer la température de fils et barres en déplacement.**

(30) Priorité: **16.01.81 FR 8100831**

(43) Date de publication de la demande:
**01.09.82 Bulletin 82/35**

(45) Mention de la délivrance du brevet:
**17.09.86 Bulletin 86/38**

(84) Etats contractants désignés:
**AT BE CH DE GB IT LI LU NL SE**

(56) Documents cités:
**FR - A - 2 109 406**
**FR - A - 2 447 543**
**FR - A - 2 473 707**

**PROCESS CONTROL and AUTOMATION, mars 1964
Londrs (GB) NEW DEVELOPMENT BY SIRA: "An
Emissivity-compensated Radiation Pyrometer", page
117**

(73) Titulaire: **MECILEC, 91 bis, rue du Cherche-Midi,
F-75006 Paris (FR)**

(72) Inventeur: **Arnaud, Robert, 6, Hameau des Engoulevents,
F-78170 La-Celle-Saint-Cloud (FR)**

(74) Mandataire: **Weinstein, Zinovi et al, Cabinet Z.
WEINSTEIN 20, Avenue de Friedland, F-75008 Paris (FR)**

**Description**

La présente invention concerne un procédé de mesure de température de corps cylindrique de longueur infinie, en déplacement suivant sa longueur, cette mesure s'effectuant indépendamment du pouvoir émissif du corps, par détection du rayonnement infrarouge.

La mesure et le contrôle de température de corps cylindrique en déplacement suivant leur plus grande longueur, par exemple les fils et les barres, est un problème industriel qui se pose de plus en plus fréquemment. Par exemple dans les câbleries la connaissance de la température du fil avant enrobage de matière plastique permet d'améliorer le processus d'enrobage. Par exemple dans les tréfileries la connaissance de la température du fil après passage dans une filière permet d'éviter des accidents en modifiant la vitesse d'étirage.

Cette invention est basée sur un principe bien connu de thermique, décrit notamment par le Professeur Desvigne dans son cours sur le rayonnement thermique à l'Institut d'Optique:

Quand un corps quelconque, dont le facteur d'émission est A, se trouve à l'intérieur d'une enceinte constituant corps noir, et si $L'_n$ est la luminance du corps noir à la température du fil, et $L_n$ la luminance de ce même corps noir à une autre température, la luminance du corps quelconque est:

$$L_f = A\, L'_n + (1-A)\, L_n$$

Si, sur un même détecteur de rayonnement infrarouge, on mesure la luminance du corps quelconque $L_f$ et la luminance du corps noir $L_n$ à une autre température, et si la différence des signaux obtenus correspond à la luminance de signal L:

$$L = L_f - L_n = A\, L'_n - L_n = A\, L'_n + (1-A)\, L_n - L_n$$
$$= A\,(L'_n - L_n)$$

Si la température du corps quelconque est celle du corps noir, $L'_n = L_n$, et la différence des signaux est nulle.

Sur la base de ce principe connu, on fait passer le corps cylindrique en déplacement suivant sa plus grande longueur à travers une enceinte chauffée constituant corps noir.

Le brevet français n° 2 109 406, déposé le 15 Octobre 1970 par le Laboratoire d'Electronique et de Physique Appliquée (LEP) et dont la délivrance a été publiée le 16 Mai 1972 concerne un procédé et dispositif de mesure de température de fil en mouvement suivant leur longueur – le fil défile devant un fond noir porté à température uniforme – et grâce à une lunette et un miroir oscillant en focalise sur un détecteur sensible à l'infrarouge les rayons parallèles issus du fil et du fond noir, au foyer du système optique.

Cette disposition a l'avantage d'assurer une mesure de température indépendante de la position du fil dans le fond noir, mais aussi l'inconvénient d'un très faible rendement optique en raison de la faible proportion des rayons infrarouge qui sont sensiblement parallèles à l'axe optique – et qui sont alors focalisés sur l'élément sensible.

La demande de brevet français publiée sous le n° 2 447 543 et déposée le 23 Janvier 1979 par la Société Eurotherm reprend en les perfectionnant les dispositions du brevet LEP antérieur, mais le dispositif optique de convergence (un miroir sphérique + un miroir plan) est utilisé pour faire converger, comme dans un pyromètre classique, le rayonnement issu du fil et du fond noir, dans un angle solide déterminé par la position du fil et l'ouverture optique – au lieu de n'utiliser que le rayonnement parallèle.

Cette disposition, utilisée couramment en pyrométrie, a l'avantage de faire croître de façon importante le rendement de l'optique – par contre les déplacements et vibrations du fil se traduisent par une instabilité en fréquence et en niveau du signal de sortie du détecteur, en ce sens que c'est l'image du fil sur le détecteur qui produit le signal de sortie, et si le fil est dans un sens perpendiculaire à son déplacement, le facteur temps intervenant, le signal change de fréquence ou de niveau, puisque la détection synchrone reste inchangée dans le temps.

La publication de PROCESS CONTROL and AUTOMATION, de Mars 1964, ayant pour titre «AN EMISSIVITY-COMPENSATED RADIATION PYROMETER», page 117, décrit une tête de mesure d'un pyromètre permettant la mesure de la température d'une surface qui émet deux radiations combinées à savoir la radiation émise par la surface elle-même et la radiation réfléchie sur cette surface et provenant d'un dispositif de chauffage de référence placé dans la tête de mesure. Le faisceau de référence du corps chauffant et les radiations combinées sont dirigés et focalisés alternativement sur un détecteur par l'intermédiaire de deux trajets optiques comprenant chacun une série de lentilles et un miroir plan, avec interposition entre les miroirs-plan et les lentilles d'images d'un disque à encoches. Une telle tête de mesure est cependant inadaptée pour la mesure de la température de corps cylindriques de grandes longueurs, tels que fils ou analogues se déplaçant suivant leur longueur et ne pose ni ne résoud les problèmes d'instabilité en fréquence et en niveau de signal de sortie du détecteur.

La présente invention a pour avantage de pallier aux inconvénients ci-dessus en n'utilisant plus le fil comme origine du signal avec sa détection synchrone, mais toute l'image contenant le fil, quelle que soit sa position, en employant deux visées, l'une vers le fil l'autre vers le fond noir et en passant de l'une à l'autre par effet de diaphragme, à la manière d'un fondu enchaîné continuel.

Pour cela, la présente invention concerne un procédé pour la mesure par thermométrie infrarouge de la température d'un corps, ledit procédé consistant à comparer par deux visées successives le rayonnement infrarouge émis par le corps avec celui émis par un corps noir, à effectuer ces deux visées par deux lentilles convergentes passantes dans l'infrarouge, et deux miroirs plan pour diriger le rayonnement capté sur un même récepteur infrarouge, à obturer successivement le rayonnement de l'une et l'autre visées par un disque à encoches placé contre les lentilles, de façon à créer un effet de diaphragme et caractérisé en ce que, en vue de la mesure de la température d'un corps cylindrique de grande longueur passant dans une enceinte constituant le corps noir, on fait aboutir les deux visées optiques en l'absence du corps cylindrique, à la même zone de fond du corps noir, on dispose les encoches du disque de telle façon que l'apparition progressive de l'image d'une première visée corresponde à la disparition progressive de l'image de la deuxième visée, jusqu'au très court instant ou seule apparaît l'image de la première visée qui tout aussitôt disparaît progressivement alors qu'apparaît progressivement l'image de la deuxième visée, jusqu'au très ourt instant où seule apparaît l'image de la deuxième visée, où à tout instant la surface cachée de la première visée est égale à la surface couverte de la seconde visée, en ce qu'on fait apparaître et disparaître successivement et progressivement des images des deux visées précédentes sur le détecteur infrarouge à la sortie duquel on collecte une tension alternative de forme triangulaire en raison de la complémentarité des surfaces cachées et ouvertes des deux visées, chaque alternance triangulaire étant représentative de la température du rayonnement émis par le fil en fonction du fond noir, et en ce que l'on traite chaque alternance par un circuit électronique repérant la même alternance des visées et délivrant une tension de sortie positive, négative ou nulle suivant que le corps cylindrique est plus chaud ou plus froid ou à la même température que le corps noir.

L'invention sera mieux comprise à l'aide de la description du mode de réalisation donné à titre d'exemple non limitatif, avec les figures annexées:

La figure 1 est le schéma de principe du dispositif de mesure, objet de l'invention, à l'exception de la partie électronique.

La figure 2 représente le disque d'obturation qui joue un rôle important.

Les figures 3, 4 et 5 représentent en fonction du temps les signaux électriques sortant du détecteur de rayonnement infrarouge.

La figure 6 représente le schéma électronique du dispositif objet de l'invention.

Les figures 7, 8, 9, 10 et 11 illustrent les signaux électriques produits dans le schéma électronique de la figure 6.

Les figures 12, 13 et 14 représentent les tensions continues obtenues en sortie du circuit électronique et représentatives de la température du corps cylindrique.

La figure 15 illustre la partie mécanique du dispositif objet de l'invention.

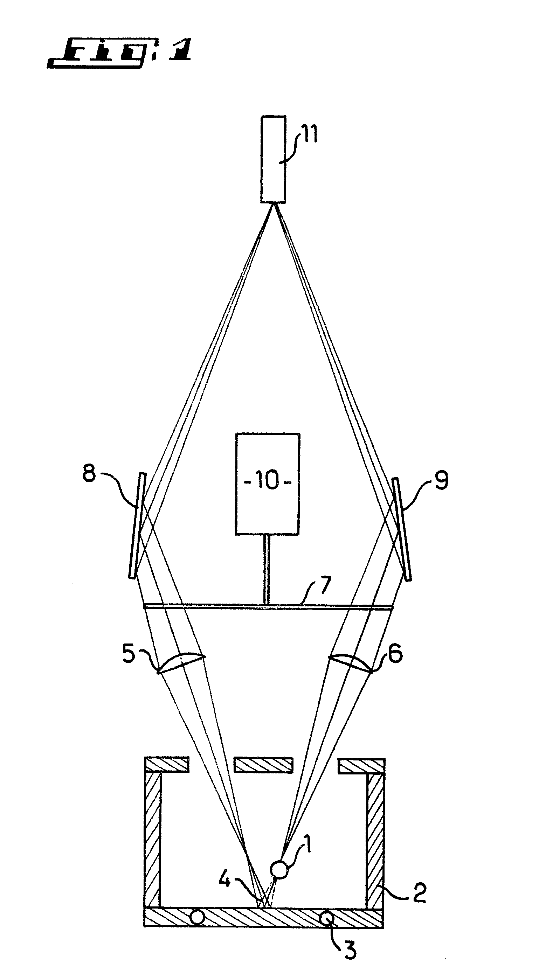

Référence est maintenant faite à la figure 1.

On a représenté en 1 le fil dont on veut connaître la température. Il se déplace dans une enceinte 2 constituant corps noir, et comme telle, faite de matériau dont l'état de surface lui confère un pouvoir émissif élevé.

Pour uniformiser la température de l'enceinte, celle-ci est entourée d'une enveloppe isolante – elle est constituée d'un matériau métallique de grande conductibilité thermique, par exemple un bronze cuprochrome-zirconium, qui présente aussi l'avantage d'une bonne résistance mécanique. La surface intérieure est revêtue de graphite.

Cette enceinte constituant corps noir est chauffée par des résistances électriques 3.

En l'absence de fil, le rayonnement émis par la même petite portion de corps noir 4 est concentré suivant deux voies distinctes par les lentilles 5 et 6 et les miroirs plan 8 et 9 sur la même surface sensible du détecteur infrarouge 11.

Le fil vient interrompre partiellement ou totalement l'une de ces voies – l'avantage de viser une même petite portion au lieu de deux portions différentes, une pour chaque voie, comme dans le brevet n° FR-A-2 447 543 déjà mentionné est que l'on est certain d'être à la même température – alors que les températures sont différentes si les zones visées sont distinctes.

L'une et l'autre visée est successivement interrompue par un disque à fentes 7, entraîné par un petit moteur synchrone 10.

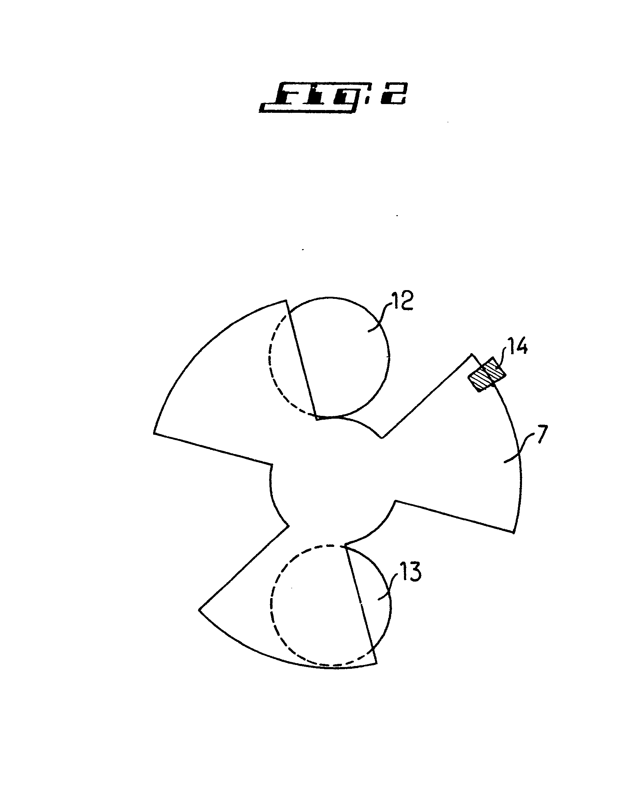

On se réfère maintenant à la figure 2, qui représente le disque à fentes utilisé. Celui-ci est placé le plus près possible des lentilles 5 et 6, de façon que l'obturation des lentilles crée un effet de diaphragme. Si 12 et 13 illustrent les ouvertures respectives des lentilles 5 et 6 les dimensions des fentes du disque 7 sont telles que la surface obstruée sur une ouverture est égale à celle ouverte sur l'autre ouverture – on peut dire aussi que la somme de la surface obstruée et de la surface ouverte reste constante.

Cette disposition permet de faire apparaître avec la même progressivité sur l'élément sensible toute l'image provenant de la première voie qui remplace celle provenant de la seconde voie, et de les faire disparaître avec la même progressivité.

On a représenté schématiquement sur la figure 15 le dispositif mécanique d'entraînement du disque à fentes et le dispositif 14 qui produit le signal de synchronisme. Le moteur 10 entraîne directement le disque 7. En 11 est monté un phototransistor qui produit les signaux de synchronisme. La détection du fil 1 s'effectue par l'optique 6, le miroir 9 et aboutit au détecteur de rayonnement infrarouge 11. L'autre voie passe par le bloc optique 5, le miroir 8 pour aboutir au même détecteur 11.

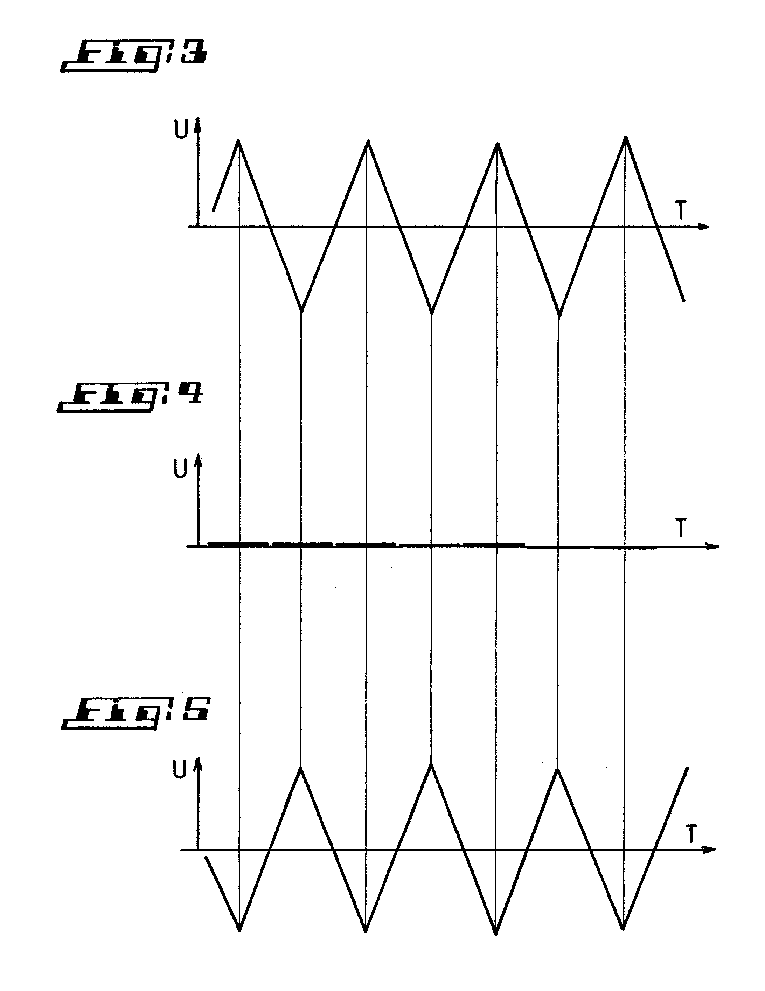

On se réfère maintenant aux figures 3, 4 et 5.

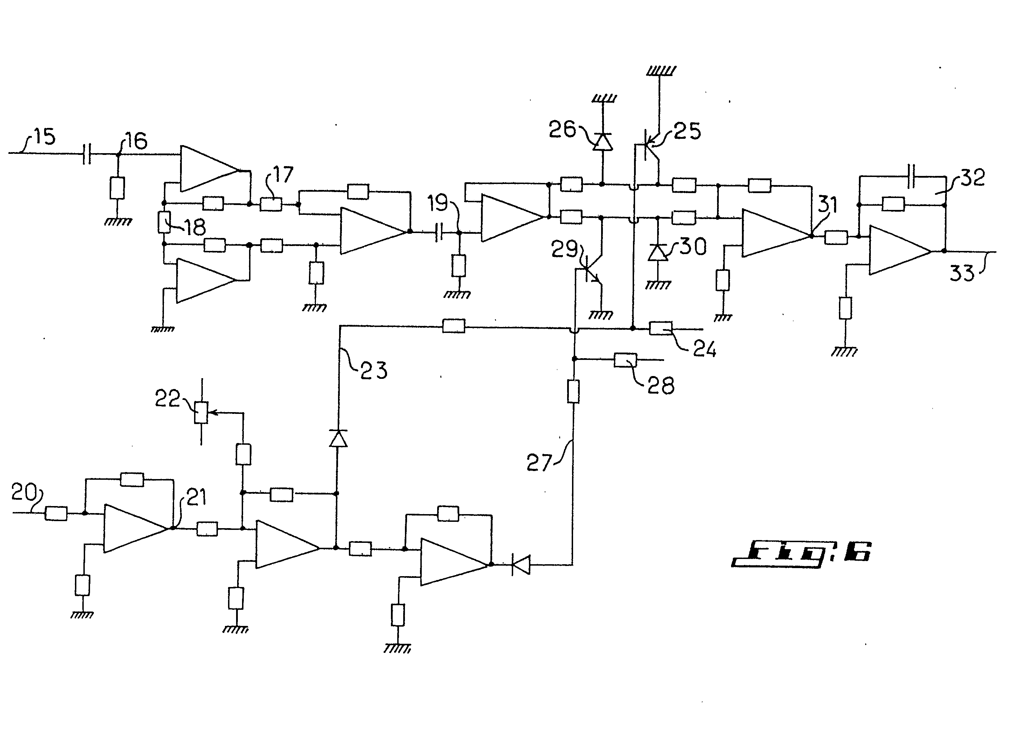

En l'absence de fil, ou si le fil est à la même température que le fond noir, le rayonnement passant par la première voie est égal au rayonnement passant par la seconde voie. Le signal de sortie est alors plat comme indiqué sur la figure 4. La figure 3 illustre le cas d'un fil plus chaud que le fond noir: le rayonnement passant par la première voie est progressivement plus important – pour atteindre un maximum – puis le rayonnement de la seconde voie remplace progressivement le

rayonnement de la première voie jusqu'à atteindre une valeur minimale.

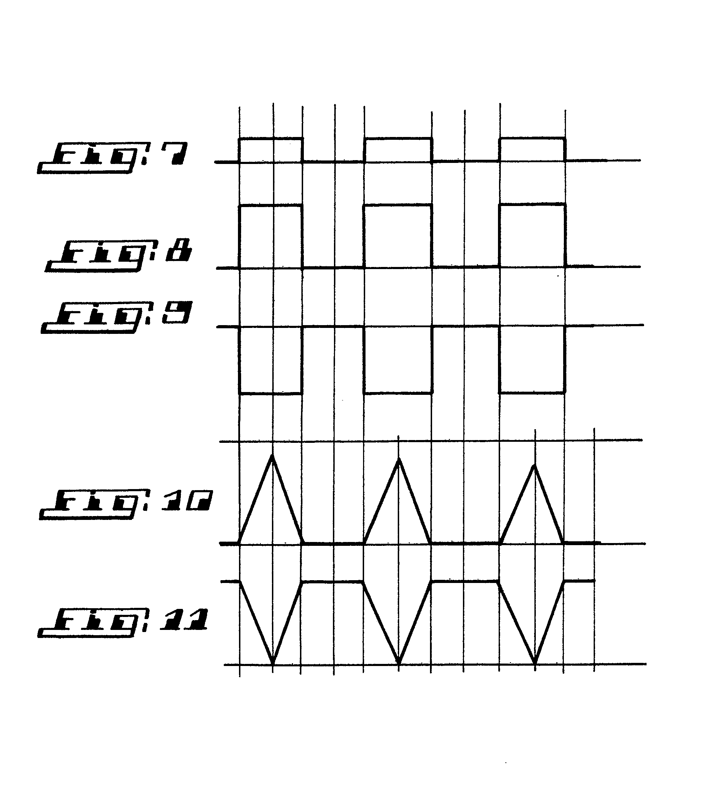

La figure 5 illustre le cas d'un fil moins chaud que le fond noir – le rayonnement passant par la première voie chassant progressivement celui de la seconde voie atteint une valeur minimale – puis il est progressivement remplacé par le rayonnement issu de la seconde voie correspondant à la visée du fond noir qui est plus importante jusqu'à atteindre une valeur maximale.

Les courbes des figures 3 à 5 représentent en fonction du temps les tensions de sortie du détecteur après le condensateur de liaison 16 qui a pour objet de rendre la courbe symétrique par rapport à la masse.

On notera que, placé devant l'optique, le disque 7 par lui-même est pratiquement sans effet sur le détecteur, car il se situe en dehors des conditions de convergence du flux.

On remarque que les courbes des figures 3 et 5 sont en opposition de phase – et qu'une alternance, celle correspondant à la visée du fil, est représentative de la température de celui-ci par rapport à la température du corps noir, puisqu'elle se rapporte à l'ensemble de la visée du fil dont toute l'image apparaît et disparaît sur le détecteur – et non sur une partie de l'image.

Cette remarque conduit à une importante simplification du circuit électronique, et évite notamment d'utiliser des circuits de détection synchrone – comme le font les deux brevets français cités ci-dessus. Le circuit électronique a pour objet d'éliminer une alternance sur deux, de repérer la bonne alternance correspondant au fil, de la mesurer, de repérer sa polarité, puisqu'elle est positive si le fil est plus chaud que le corps noir, et négative si le fil est plus froid.

Si on se réfère à la figure 2, un phototransistor est placé en 14 pour détecter la position du disque 7 – et plus particulièrement repérer l'alternance utile des figures 3 ou 5, ce phototransistor donnant une impulsion au passage du disque.

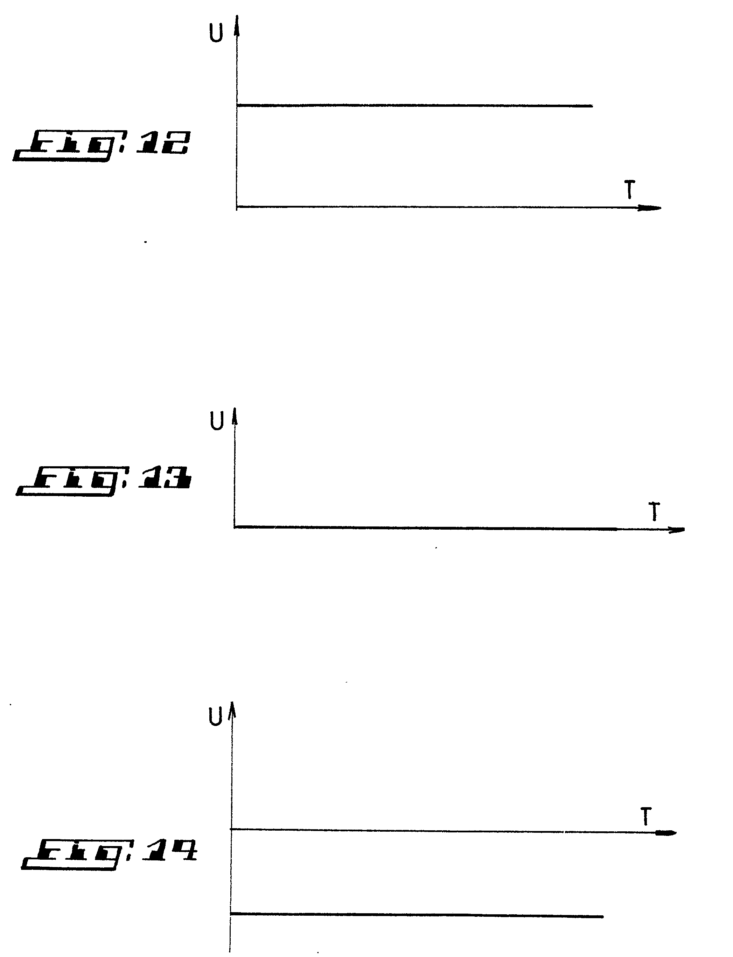

On se réfère maintenant à la figure 6, illustrant le circuit électronique de l'appareil objet de la présente invention.

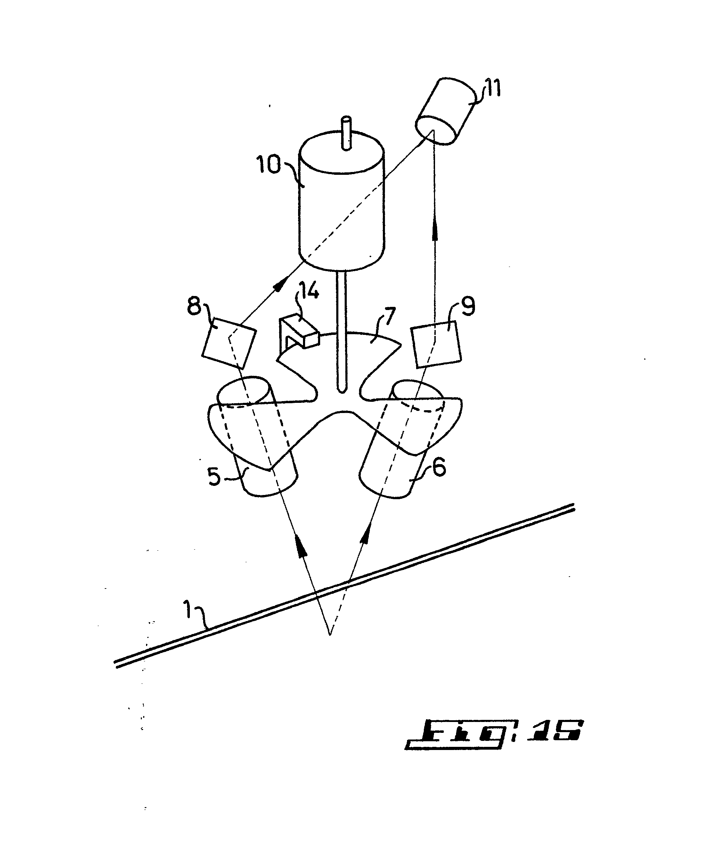

Le détecteur infrarouge produit en 15 une tension alternative, qui passe à travers l'ensemble capacité/résistance 16 afin d'éliminer toute composante continue. Ces alternances sont amplifiées dans le circuit 17, le rapport d'amplification étant déterminé par la valeur de la résistance 18. Il sort en 19, après l'ensemble capacité/résistance, une tension alternative amplifiée et symétrique par rapport à la masse, illustrée par les figures 3, 4 et 5. Il entre en 20 des impulsions provenant du phototransistor 14 de la figure 2. Ces impulsions sont représentées sur la figure 7. Elles sont amplifiées en 21 de la figure 6.

Le potentiomètre 22 a pour objet d'éliminer l'offset après amplification.

Il sort en 23 et 24 des impulsions positives ou négatives illustrées sur les figures 8 et 9.

La tension alternative amplifiée provenant du détecteur sort en 19 passe dans deux branches, l'une annulant l'alternance positive par la diode 26, l'autre alternance négative par la diode 30.

Les transistors 25 et 29 normalement passant grâce aux courants circulant à travers les résistances 24 et 28, sont bloqués et non passant lorsqu'arrivent sur leur base les tensions illustrées sur les figures 8 et 9.

Il sort en 31 des tensions dont les formes sont illustrées sur les figures 10 ou 11 ou 4, représentatives de la température du fil. Ces tensions passent dans le filtre passe-bas 32, et il en sort une tension continue, positive, négative ou nulle illustrée sur les figures 12, 13 et 14.

L'appareil, objet de la présente invention, a donné d'excellents résultats quant à la mesure de la température du corps cylindre en utilisant plus particulièrement comme détecteur, un détecteur rapide au sélénium.

**Revendications**

1. Procédé pour la mesure par thermométrie infrarouge de la température d'un corps (1), ledit procédé consistant à comparer par deux visées successives le rayonnement infrarouge émis par le corps (1) avec celui émis par un corps noir, à effectuer ces deux visées par deux lentilles convergentes (5, 6) passantes dans l'infrarouge, et deux miroirs plan (8, 9) pour diriger le rayonnement capté sur un même récepteur infrarouge (11), et à obturer successivement le rayonnement de l'une et l'autre visées par un disque (7) à encoches placé contre les lentilles, de façon à créer un effet de diaphragme, caractérisé en ce que, en vue de la mesure de la température d'un corps cylindrique de grande longueur passant dans une enceinte (2) constituant le corps noir on fait aboutir les deux visées optiques en l'absence du corps cylindrique, à la même zone de fond (4) du corps noir, et en ce qu'on dispose les encoches du disque de telle façon que l'apparition progressive de l'image d'une première visée corresponde à la disparition progressive de l'image de la deuxième visée, jusqu'au très court instant où seule apparaît l'image de la première visée qui tout aussitôt disparaît progressivement, alors qu'apparaît progressivement l'image de la deuxième visée, jusqu'au très court instant où seule apparaît l'image de la deuxième visée, où à tout instant la surface cachée de la première visée est égale à la surface ouverte de la seconde visée, en ce qu'on fait apparaître et disparaître successivement et progressivement les images des deux visées précédentes sur le détecteur infrarouge (11) à la sortie duquel on collecte une tension alternative de forme triangulaire en raison de la complémentarité des surfaces cachées et ouvertes des deux visées, chaque alternance triangulaire étant représentative de la température du rayonnement émis par le fil en fonction du fond noir, et en ce que l'on traite chaque alternance par un circuit électronique repérant la même alternance des visées et délivrant une tension de sortie positive, négative ou nulle suivant que le corps cylindrique est plus chaud ou plus froid ou à la même température que le corps noir.

2. Procédé selon la revendication 1, caractérisé en ce qu'on utilise un détecteur rapide au sélénium comme détecteur infrarouge (11).

## Claims

1. Method od measuring through infrared thermometry of the temperature of a body (1), the said method consisting in comparing through two successive sightings the infrared radiation emitted by the body (1) with that emitted by a black body, effecting these two sightings with two converging lenses (5, 6) letting infrared rays passing therethrough and two plane mirrors (8, 9) to direct the picked-up radiation onto a same infrared receiver (11), and successively shutting off the radiation of either sighting by a notched disc (7) placed against the lenses so as to create a diaphragm effect, characterized in that with a view to measure the temperature of a cylindrical body of great length moving within an enclosure (2) forming the black body, one makes both optical sightings lead, in the absence of the cylindrical body, to the same background area (4) of the black body and in that one disposes the notches of the disc in such a way that the progressive appearance of the image of a first sighting corresponds to the progressive disappearance of the image of the second sighting until the very short moment where alone appears the image of the first sighting which all at once disappears progressively whereas the image of the second sighting appears progressively until the very short moment where alone appears the image of the second sighting, wherein at any moment the hidden surface of the first sighting is equal to the open surface of the second sighting, and that one successively and progressively makes appear and disappear the images of both preceding sightings onto the infrared detector (11) at the outlet of which one collects an a.c. voltage of triangular shape in view of the complementarity of the hidden and open surfaces of both sightings, each triangular alternation being representative of the temperature of the radiation emitted by the wire in accordance with the background, and in that one treats each alternation by an electronic circuit sensing the same alternation of the sightings and supplying a positive, negative or zero output voltage according as the cylindrical body is hotter or colder than or at the same temperature as the black body.

2. Method according to claim 1, characterized in that one uses a fast silicon detector as an infrared detector (11).

## Patentansprüche

1. Verfahren zum Messen durch Infrarotwärmemessung der Temperatur eines Körpers, wobei das besagte Verfahren darin besteht, durch zwei aufeinanderfolgende Zielen die durch den Körper (1) ausgesandte Infrarotstrahlung mit derjenigen die durch einen schwarzen Körper ausgesandt wird zu vergleichen, diese beiden Zielen mit zwei im Infraroten durchlässigen Sammellinsen (5, 6) und zwei ebenen Spiegeln (8, 9) durchzuführen, um die aufgefangene Strahlung auf einen selben Infrotempfänger (11) zu richten, und die Strahlung des einen und des anderen Zielens durch eine gegen die Linsen gestellte Rastenscheibe (7) nacheinander zu unterbrechen, um eine Blendenwirkung zu schaffen, dadurch gekennzeichnet, dass, zwecks der Messung der Temperatur eines sich in einer den schwarzen Körper bildenden Umhüllung (2) bewegenden zylindrischen Körpers grosser Länge, man die beiden optischen Zielen in Abwesenheit des zylindrischen Körpers auf den selben Hintergrundbereich (4) des scharzen Körpers auftreffen lässt und dass man die Rasten der Scheibe derart anordnet, dass das allmähliche Erscheinen des Bildes eines ersten Zielens dem allmählichen Verschwinden des Bildes des zweiten Zielens entspricht bis zu dem sehr kurzen Augenblick, wo allein das Bild des ersten Zielens erscheint, welches sofort allmählich verschwindet, während das Bild des zweiten Zielens allmählich erscheint bis zu dem sehr kurzen Augenblick, wo das Bild des zweiten Zielens allein erscheint, wobei in jedem Augenblick die verdeckte Fläche des ersten Zielens der offenen Fläche des zweiten Zielens gleich ist, dass man die Bilder der beiden vorangehenden Zielen auf dem Infrarotdetektor (11) nacheinander und allmählich erscheinen und verschwinden lässt, am Ausgang von welchem man die Wechselspannung dreieckiger Gestalt wegen der Komplementarität der verdeckten und offenen Flächen der beiden Zielen erfasst, wobei jede dreieckige Halbwelle die Temperatur der durch den Draht in Abhängigkeit des Dunkelfeldes ausgesandten Strahlung darstellt und dass man jede Halbwelle durch eine die selbe Halbwelle der Zielen aufspürende elektronische Schaltung behandelt, die eine positive, negative oder Nullausgangspannung abgibt je nachdem der zylindrische Körper heisser oder kälter als oder die selbe Temperatur aufweist wie der schwarze Körper.

2. Verfahren nach Anspruch 1, dadurch gekennzeichnet, dass man einen Schnellselendetektor als Infrarotdetektor (11) verwendet.

_Fig. 1_

# FIG. 2

**Fig. 3**

**Fig. 4**

**Fig. 5**

Fig. 6

0 058 806

**Fig. 7**

**Fig. 8**

**Fig. 9**

**Fig. 10**

**Fig. 11**

**Fig. 12**

U

T

**Fig. 13**

U

T

**Fig. 14**

U

T

Fig. 15